# EUROPÄISCHE PATENTSCHRIFT

(11) **EP 1 213 697 B1**
(45) Veröffentlichungstag und Bekanntmachung des Hinweises auf die Patenterteilung: **15.09.2010**
(21) Anmeldenummer: 01124068.6
(22) Anmeldetag: 10.10.2001
(51) Int. Cl.: G09F 3/02, G09F 3/10

(54) **Verfahren und Vorrichtung zur Herstellung von Klebeetiketten oder Klebetapeten**
Method and apparatus for manufacturing self adhesive labels
Procedé et dispositif de fabrication des étiquettes auto-adhesives

(30) Priorität: 12.10.2000 DE 10050472; 26.06.2001 DE 10130747
(43) Veröffentlichungstag der Anmeldung: 12.06.2002
(73) Patentinhaber: CGH Consultants, 26129 Oldenburg (DE)
(72) Erfinder: Verlinden, Peter, 26180 Rastede (DE); Thal, Rolf, 28790 Schwanewede (DE); Lattek, Horst, 26939 Ovelgönne (DE)
(74) Vertreter: Thomas, Götz

(56) Entgegenhaltungen:
- EP-A- 0 403 161
- US-A- 4 872 707
- US-A- 5 672 231
- US-A- 5 773 136
- US-A- 6 099 943

## Beschreibung

Die Erfindung betrifft ein Verfahren zur Herstellung von Klebeetiketten, Klebetapeten oder dergleichen Zuschnitten aus einem bahn- oder bogenförmigen Schichtmaterial sowie ein Verfahren zum Aufkleben der Zuschnitte auf einen Untergrund bzw. zum Ablösen der Zuschnitte vom Untergrund. Die Erfindung betrifft weiter ein Mittel zum Aufbringen auf die Rückseite eines Schichtmaterials zur Herstellung von Klebeetiketten, Klebetapeten oder dergleichen zum Aufkleben auf einen Untergrund bestimmten Zuschnitten, das ein späteres Ablösen der Zuschnitte vom Untergrund erleichtern soll, sowie einen zum Aufkleben auf einen Untergrund bestimmten Schichtmaterialzuschnitt, insbesondere ein Klebeetikett oder eine Klebetapete mit einem auf der Rückseite aufgebrachten, das Ablösen des Zuschnitts vom Untergrund erleichternden Mittel.

Bei der Etikettierung von Konsumgütern mit Klebeetiketten wird vom Hersteller oder vom Handel nicht selten gefordert, dass sich die aufgeklebten Etiketten einerseits ohne große Mühe vollständig und ohne eine Beschädigung der Oberfläche der Konsumgüter von diesen abziehen lassen, andererseits jedoch sicher an deren Oberflächen haften.

Ein Beispiel hierfür sind Flaschenetiketten, wie sie auf der Rückseite von Saftflaschen der Fa. Becker's bester verwendet wurden. Bei diesen Etiketten war die der Flasche zugewandte Etikettenrückseite mit Sammelpunkten zum Ausschneiden und Einsenden an den Hersteller bedruckt, die erst nach einem Abziehen der Etiketten durch einen Kunden sichtbar wurden. Ein weiteres, insbesondere in Großbritannien verbreitetes Beispiel sind etikettierte Eierkartons, deren Klebeetikett auf seiner Rückseite mit einem aufgedruckten Preisrätsel versehen ist, das nach dem Abziehen des Etiketts vom Eierkarton vom Kunden ausgefüllt und an den Produzenten der Eier zurückgeschickt werden kann.

Um das Ablösen derartiger, häufig als Peel-off-Etiketten bezeichneter Etiketten von den Flaschen, Eierkartons oder anderen Gegenständen zu erleichtern, wurde in der DE 88 08 269 U1 bereits vorgeschlagen, ein üblicherweise aus Papier bestehendes Substrat nach dem Bedrucken und vor dem Aufkleben auf einen Gegenstand auf seiner Rückseite mit einer sogenannten Neutralisations- oder Sperrlackbeschichtung zu versehen. Der Sperrlack, beispielsweise Acetat, verringert die Adhäsion des Klebers an der Etikettenrückseite, indem er auf der Rückseite des Zuschnitts eine Sperrschicht bildet. Diese Sperrschicht verhindert, dass der zum Aufkleben verwendete Kleber, gewöhnlich ein Dispersionskleber auf Wasserbasis, mit der Rückseite des Zuschnitts in Berührung tritt bzw. in ein saugfähiges Schichtmaterial eindringt und so das spätere Ablösen der Etiketten verhindert. Der Sperrlack muss dabei so auf den verwendeten Kleber abgestimmt werden, dass seine Adhäsion am Kleber kleiner ist als die Adhäsion des Klebers am Gegenstand und kleiner als die Adhäsion des Sperrlacks an der Etikettenrückseite, so dass sich die Etiketten beim Abziehen an der Grenzschicht zwischen dem Sperrlack und dem Kleber vom Gegenstand ablösen.

In der Praxis hat sich jedoch gezeigt, dass die Haftung dieser Sperrlacke am Kleber aus noch unbekannten Gründen selbst bei gleichbleibender Zusammensetzung von Kleber und Sperrlack großen Schwankungen unterliegt. In einigen Fällen war die Haftung so gering, dass sie zu einer unerwünschten vorzeitigen Selbstablösung der Etiketten führte, während sie in anderen Fällen so groß war, dass der Sperrlack zusammen mit einem Teil des Etikettenaufdrucks bzw. des Substrats am Kleber haften blieb und damit eine weitere Verwendung der Peel-off-Etiketten gemäß dem vorgesehenen Zweck verhinderte.

Ein noch weiteres Beispiel sind Preisetiketten, die vom Handel auf die Oberfläche von Konsumgütern aufgeklebt werden. Diese Preisetiketten sollen einerseits vom Verkaufspersonal mühelos und ohne eine Beschädigung der Oberflächen der Konsumgüter abgezogen werden können, beispielsweise um ein anderes Preisetikett aufzukleben oder um sie bei Geschenkartikeln vor dem Verpacken in Geschenkpapier zu entfernen. Zu diesem Zweck sind zwar bereits Preisetiketten bekannt, die sich zumindest auf glatten Oberflächen zusammen mit dem auf ihre Rückseite aufgebrachten Kleber abziehen lassen. Diese Preisetiketten können jedoch nach einem vorsichtigen Abziehen durch Dritte zu Manipulationszwecken auf andere höherpreisige Konsumgüter aufgeklebt werden.

Ein weiteres Problem verursachen Klebeetiketten in der Getränkeindustrie, wo die auf Glas- oder Kunststofflaschen aufgeklebten Etiketten vor einer erneuten Befüllung der Falschen wieder abgelöst werden müssen. Das Ablösen der Etiketten erfolgt dort gewöhnlich in heißen Laugenbädern, in denen eine wässrige Reinigungsflüssigkeit durch die Etiketten hindurch zu den wasserlöslichen Klebern vordringt und diese löst. Jedoch werden die Etiketten in diesen Reinigungsbädern angegriffen und teilweise aufgelöst, so dass die zum Bedrucken der Etiketten verwendete Druckfarbe zusammen mit weiteren Schadstoffen in die Laugenbäder gelangt. Die Bäder müssen daher verhältnismäßig häufig ausgetauscht oder aufbereitet werden, wodurch für die Flaschenreinigung nicht unerhebliche Kosten entstehen.

Um diese Probleme zu vermeiden, wurde in der DE 40 079 58 bereits eine Vorrichtung zum Entfernen von Klebeetiketten von Flaschen oder anderen Behältern vorgeschlagen, in der die Etiketten durch einen Fluidstrahl von den rotierenden Behältern entfernt und radial nach außen getragen werden. Das Entfernen der Etiketten kann erleichtert werden, wenn sich auf der Rückseite der Etiketten ein Trennmittel befindet, dessen geringe Haftung bewirkt, dass es als Anti-Haftmittel oder Lösemittel dient. Als Beispiel für die Offenbarung eines AntiHaftmittels auf Etiketten vor deren Aufkleben auf die Flaschen ist dort die DE 35 08 150 A1 genannt. Dabei treten jedoch auch die bereits zuvor genannten Probleme einer Beschichtung mit Sperrlack auf.

Ähnliche Probleme wie beim Etikettieren mit abziehbaren Klebeetiketten treten beim Tapezieren mit abziehbaren Klebetapeten auf. Diese Tapeten sollen zwar einerseits gut am Untergrund haften, sollen sich andererseits jedoch auch wieder leicht vom Untergrund abziehen lassen, zum Beispiel wenn dieser neu tapeziert werden soll. Das Abziehen von Tapeten vom Untergrund ist jedoch nicht selten mit einem hohen Zeit- und Arbeitsaufwand verbunden, weil sich die Tapete nur stückweise vom Untergrund löst, selbst wenn sie zuvor mit Wasser benetzt wird, um den zum Ankleben verwendete Tapetenkleister aufzuweichen.

Da jedoch das Aufweichen des Tapetenkleisters mit Wasser bei wasserabweisenden Tapeten nicht funktioniert, wurde in der DE 38 19 887 A1 bereits vorgeschlagen, die Tapete aus zwei Papierschichten herzustellen, zwischen denen ein Scheidemittel zur trockenen Trennung der beiden Schichten voneinander auf einer Seite des Scheidemittels angeordnet ist. Diese Anordnung hat jedoch den Nachteil, dass die zwischen dem Scheidemittel und dem Untergrund angeordnete Papierschicht beim Abziehen der Tapete am Untergrund haften bleibt und anschließend unter Verwendung von Wasser entfernt werden muss.

Aus der US-A-5,773,136 ist bereits ein mehrschichtiger Polymerfilm zum Aufkleben durch Schmelzkleber bekannt, bei dem sich eine Zwischenschicht bei einem späteren Ablösen unter Kohäsionsbruch aufspaltet, wobei ein Teil der Zwischenschicht an der Basisschicht und ein Teil an der wärmeschmelzbaren Polymerschicht haften bleibt. Die Zwischenschicht besteht dort aus einer Mischung von Polymeren, die mittels eines Extruders in geschmolzenem Zustand aufgebracht werden.

Weiter ist aus der US-A-4,872,707 die Verwendung eines Spaltmittels aus zwei unterschiedlichen Polymerschichten auf einem bedruckbaren Papiersubstrat bekannt, bei dem aus dem Substrat ausgestanzte Coupons von einem Trägermaterial abgenommen und auf einen Gegenstand aufgeklebt und später unter Trennung des Spaltmittels wieder von diesem abgenommen werden können. Die Trennung des Spaltmittels beruht dort auf einer Unverträglichkeit der beiden Schichten die sich beim Abnehmen des Coupons entlang der Schichtgrenze voneinander trennen, wobei die Integrität jeder Schicht gewahrt bleibt.

Ausgehend hiervon liegt der Erfindung die Aufgabe zugrunde, die eingangs genannten Erfindungsgegenstände dahingehend zu verbessern, dass ein Auftrag des Spaltmittels in herkömmlichen Druckmaschinen ermöglicht wird und sich mit einem wasserlöslichen Kleber aufgeklebte Klebeetiketten, Klebetapeten oder andere zum Aufkleben auf einen Untergrund sowie zum späteren Abziehen vom Untergrund bestimmte Schichtmaterialzuschnitte unabhängig vom Untergrund und unabhängig von der Zusammensetzung des wasserlöslichen Klebers mit einer definierten Abziehkraft vollständig abziehen lassen.

Diese Aufgabe wird erfindungsgemäß durch die in den unabhängigen Patentansprüchen 1, 5, 8, 10, 18, 19 und 20 angegebenen Merkmalskombinationen gelöst.

Durch die erfindungsgemäßen Merkmale können die verwendeten Zuschnitte, zum Beispiel vom Boden bis zur Decke eines Raumes reichende Tapetenbahnen oder einzelne Klebeetiketten, bei der Herstellung in konventionellen Druckmaschinen mit dem Spaltmittel beschichtet und später wieder vollständig vom Untergrund abgezogen werden, das heißt, ohne dass Fetzen oder Teile des Substrats auf dem Untergrund haften bleiben. Weiter kann die Haftung der Zuschnitte am Untergrund bzw. die zum Abziehen der Zuschnitte erforderliche Abziehkraft auf einen definierten Wert eingestellt werden, der lediglich durch die Kohäsionseigenschaften des Spaltmittels bestimmt wird, während er sowohl von dem verwendeten Kleber als auch von den Oberflächeneigenschaften der Rückseite des Schichtmaterials unabhängig ist, vorausgesetzt die Adhäsionskräfte zwischen dem Kleber und dem Spaltmittel bzw. dem Untergrund sowie die Adhäsionskräfte zwischen der Rückseite des Schichtmaterials und dem Spaltmittel übersteigen beim Abziehen oder Ablösen der Zuschnitte erfindungsgemäß die inneren Kohäsionskräfte des Spaltmittels.

Als Schichtmaterial wird im Rahmen dieser Erfindung ein aus mehreren dünnen Materialschichten bestehendes Material bezeichnet, das neben einem bedruckbaren Substrat, zum Beispiel einem ein- oder mehrschichtigen Papier- oder Folienmaterial in Form von Bahnen oder Bogen, mindestens eine weitere Schicht aus einem auf die Rück- oder Klebeseite des Substrats aufgebrachten Spaltmittel aufweist, jedoch darüber hinaus gewöhnlich noch weitere Schichten aus Druckfarbe, Lack oder dergleichen auf der Vorderseite und ggf. zwischen dem Substrat und dem Sperrlack umfassen kann. Das Bedrucken des Substrats erfolgt gewöhnlich, bevor das Schichtmaterial zugeschnitten wird, könnte jedoch grundsätzlich auch danach erfolgen. Vorzugsweise wird das Spaltmittel im Zuge des Bedruckens des Substrats auf dessen Rückseite aufgebracht, jedoch ist grundsätzlich auch ein Auftrag auf die fertigen Zuschnitte möglich, bevor diese auf den Untergrund aufgeklebt werden.

Als Spaltmittel wird im Rahmen dieser Erfindung eine Zusammensetzung bezeichnet, mit der die Rückseite des Substrats oder der Zuschnitte beschichtet ist oder beschichtet wird, ggf. nach dem Aufbringen zusätzlicher Schichten, und deren innere Kohäsion im Verwendungszustand kleiner ist als ihre Adhäsion an der Rückseite des Substrats oder der Zuschnitte und kleiner ist als ihre Adhäsion an einem zum Aufkleben der Schichtmaterialzuschnitte verwendeten Kleber, so dass sie sich bei einem späteren Abziehen der Zuschnitte vom Untergrund durch Kohäsionsbruch in zwei Schichten aufspaltet, von denen eine an der Rückseite des Schichtmaterials und eine am Kleber haften bleibt.

Bei einer Verwendung des Spaltmittels zur Beschichtung der Rückseite von Preisetiketten kann zum einen beim Abziehen der Preisetiketten eine Beschädigung der Oberfläche eines etikettierten Gegenstandes sicher verhindert werden, weil der Kleber und ein Teil des Spaltmittels auf dem etikettierten Gegenstand zurückbleiben. Zum anderen lassen sich auch Manipulationen durch Aufkleben der abgezogenen Preisetiketten auf andere Waren verhindern, weil die Etiketten nach ihrem Abziehen nicht mehr haften.

Vorzugsweise besteht das Spaltmittel aus einer homogenen Mischung eines Polymers und einer Metallseife in feinst verteilter Form, die in Form einer Dispersion auf die Rückseite des Substrats oder Schichtmaterials aufgedruckt, aufgestrichen oder evtl. auch aufgesprüht wird und nach dem Trocknen darauf einen dünnen klebefreien lack- oder wachsartigen Überzug bildet. Bei Etiketten mit bedruckter Rückseite erfolgt der Auftrag vorzugsweise unmittelbar nach dem Bedrucken und bei Etiketten oder anderen Zuschnitten mit bedruckter Vorderseite vorzugsweise im Zuge des Bedruckens.

Da sowohl Tapeten als auch die meisten Klebeetiketten mit Ausnahme von Selbstklebeetiketten mittels eines wasserhaltigen Klebers aufgeklebt werden, besteht das Spaltmittel gemäß einer bevorzugten Ausgestaltung der Erfindung im Wesentlichen aus einer Mischung aus zwei Komponenten, einem modifizierten "weichen" Styrol-Acrylat-Copolymer, das in getrocknetem Zustand wasserabweisende Eigenschaften aufweist und damit ein Vordringen von wasserhaltigem Kleber durch das Spaltmittel bis zur Rückseite des Substrats verhindert, sowie Calciumstearat, mit dem sich die innere Kohäsion des Spaltmittels auf einen Wert einstellen lässt, der ein leichtes Abziehen der Zuschnitte infolge eines Kohäsionsbruchs innerhalb der Spaltmittelschicht gestattet. Der Auftrag der Mischung erfolgt bevorzugt in Form einer wässrigen Dispersion, in der das Mischungsverhältnis der beiden Komponenten vorzugsweise zwischen 40:60 und 60:40 Gewichtsteilen pro 100 Gewichtsteilen Feststoffanteil liegt.

Weitere Vorteile des genannten Spaltmittels bestehen bei einer Verwendung auf Etiketten darin, dass die nach dem Abziehen der Etiketten an deren Rückseite haftende Spaltmittelschicht zum einen eine ausreichende Transparenz aufweist, so dass eine darunter auf die Etikettenrückseite aufgedruckte Beschriftung gut lesbar ist, und dass die Spaltmittelschicht zum anderen mit lösemittelhaltigem Filzstift, Bleistift und Kugelschreiber beschriftet werden kann, zum Beispiel um ein darunter auf der Etikettenrückseite aufgedrucktes Preisausschreiben oder Preisrätsel auszufüllen.

Außerdem kann insbesondere bei Etiketten aus einem saugfähigen Substrat, wie beispielsweise preiswerteren Papiersorten, der Verbrauch an Kleber erheblich reduziert werden, da das Spaltmittel verhindert, dass ein Teil des Klebers vom Substrat aufgesaugt wird.

Bei einer Verwendung auf Tapeten bestehen die hauptsächlichen Vorteile darin, dass sich die auf ihrer Rückseite mit dem Spaltmittel beschichteten Tapeten gut mit gebräuchlichen Tapetenkleistern auf der Grundlage von Stärke auf verputzte Wände oder Decken oder andere Untergründe aufkleben lassen, dass zum Abziehen der Tapete kein Einweichen mehr erforderlich ist, dass sich die Tapeten in vollständigen Bahnen vom Untergrund abziehen lassen und dass sich die nach dem Abziehen der Tapeten zusammen mit dem Tapetenkleister auf dem Untergrund haftende Spaltmittelschicht wieder gut als Untergrund zum Aufkleben einer neuen Tapete eignet.

An Stelle der zuvor genannten Mischung können als Spaltmittel jedoch ggf. auch andere Mischungen aus einer in getrocknetem Zustand wasserabweisenden Polymerdispersion und einer Metallseife mit einem langkettigen Alkylrest mit C₁₀-C₂₅ oder Alkylarylrest oder Aralkylrest mit C₁₀-C₃₀, wie zum Beispiel Eisen- oder Zinkpalmitat verwendet werden, mit denen sich die innere Kohäsion der getrockneten Polymerdispersion auf einen Wert verringern lässt, der kleiner ist als die Adhäsion der getrockneten Mischung an der Rückseite des Schichtmaterials bzw. am Kleber. Ggf. können der Polymerdispersion auch andere emulgatorartige Stoffe mit einer hydrophilen Endgruppe, wie zum Beispiel Sulfate, Sulfonate, Phosphate, Lactate, Citrate beigemischt werden. Daneben kann das Spaltmittel Additive zum Verhindern eines Aufschäumens im Verarbeitungszustand, zur Verbesserung der Laufeigenschaften in einer Druckmaschine und/oder zur Verbesserung der Benetzung von nassen Druckfarben enthalten.

Die Herstellung der rückseitig mit Spaltmittel beschichteten Zuschnitte erfolgt aus Schichtmaterialien, die üblicherweise zur Herstellung von Klebeetiketten oder Tapeten verwendet werden, insbesondere aus verschiedenen Papiersorten aber auch aus Kunststoff- oder Metallfolien oder laminierten Verbund-Schichtmaterialien in Bahn- oder Bogenform, die durch ein gebräuchliches Druckverfahren auf ihrer Vorder- und ggf. auf ihrer Rückseite bedruckt und vorzugsweise in derselben Maschine mit dem Spaltmittel beschichtet werden. Die Beschichtung erfolgt zweckmäßig durch Aufdrucken oder Aufstreichen als wässrige Dispersion in einer Menge zwischen 5 und 10 g/m² auf die unbedruckte oder bedruckte oder in sonstiger Weise vorbeschichtete Rückseite des Substrats und durch eine anschließende Trocknung des Schichtmaterials. Da das getrocknete wachs- oder lackartige Spaltmittel keine klebenden Eigenschaften aufweist, kann das Schichtmaterial nach der Trocknung und vor einer eventuellen Weiterverarbeitung, z.B. durch Ausstanzen von Etiketten oder durch Unterteilen in handelsübliche Tapetenbahnen wie üblich auf Rollen aufgewickelt oder in Bogenstapeln gestapelt werden.

Gemäß einem weiteren Aspekt der Erfindung umfasst eine Vorrichtung zur Herstellung von rückseitig mit Spaltmittel beschichtetem bahn- oder bogenförmigem Schichtmaterial Einrichtungen zum Aufbringen des Spaltmittels, wobei diese Einrichtungen vorzugsweise in die zum Bedrucken der Etiketten verwendete Druckmaschine integriert sind und bevorzugt eine aus einem Behälter mit flüssigem Spaltmittel gespeiste Druck- oder Rasterwalze umfassen. Alternativ können die zum Aufbringen des Spaltmittels verwendeten Einrichtungen jedoch auch eine Streich- oder Lackiervorrichtung umfassen, die in Druckereien üblicherweise zum Streichen oder Lackieren von Bedruckstoffen verwendet wird.

Gemäß einem noch weiteren Aspekt der Erfindung ist deren Einsatz auch bei Selbstklebeetiketten vorgesehen, die gewöhnlich auf ihrer Rückseite mit dem Kleber beschichtet und lösbar auf ein Trägersubstrat aufgeklebt sind, von dem sie vor ihrem Aufkleben auf einen Gegenstand oder einen anderen Untergrund abgezogen werden. In diesem Fall wird ein zwischen dem Kleber und der Etikettenrückseite angeordnetes erfindungsgemäßes Spaltmittel verwendet, dessen Kohäsion größer als die Adhäsion des Klebers am Trägersubstrat ist, so dass die Etiketten zusammen mit dem Spaltmittel und dem Kleber vom Trägersubstrat abgezogen und auf den Untergrund aufgeklebt werden können. Beim späteren Abziehen der Etiketten vom Untergrund kommt es wieder zu einer Aufspaltung des Spaltmittels durch Kohäsionsbruch in zwei Spaltmittelschichten, von denen eine an der Etikettenrückseite und eine am Kleber haftet, wie bereits zuvor für nicht selbstklebende Etiketten beschrieben.

Das Spaltmittel gestattet jedoch nicht nur ein manuelles Abziehen der Schichtmaterialzuschnitte, sondern ermöglicht es erstmals auch, ein funktionierendes automatisierbares Verfahren zum Ablösen von Etiketten von Flaschen oder dergleichen bereitzustellen, mit dem sich die Probleme beim Ablösen von Etiketten in Laugenbädern vermeiden lassen. Das erfindungsgemäße Ablöseverfahren unter Aufspaltung der Spaltmittelschicht zwischen der Etikettenrückseite und dem Kleber mittels eines Fluidstrahls sorgt für eine vollständige zerstörungsfreie Ablösung des Etikettenmaterials und ist von der Zusammensetzung des Untergrundes, der Etiketten und des Klebers unabhängig. Das erfindungsgemäße Verfahren kann daher zur Ablösung sämtlicher Arten von Etiketten auf nahezu allen Untergründen eingesetzt werden, vorausgesetzt die Etiketten sind vor ihrem Aufkleben auf den Untergrund auf ihrer Rückseite mit dem Spaltmittel beschichtet worden.

Bei dem erfindungsgemäßen Verfahren zum Ablösen von Etiketten mittels eines Fluidstrahls ebenso wie beim Abziehen der erfindungsgemäßen Etiketten von Hand werden die Etiketten ausgehend von einem ihrer Ränder abgelöst, wobei der Kohäsionsbruch in der Spaltmittelschicht sukzessive in Richtung eines entgegengesetzten Randes fortschreitet, und zwar entlang einer quer zu dieser Richtung verlaufenden linienförmigen Spaltfront. Die für ein Vordringen der Spaltfront erforderlichen Kräfte sind dabei verhältnismäßig gering, so dass die Geschwindigkeit des Fluidstrahls nicht sehr groß sein muss, während umgekehrt die Flächenhaftung zwischen den Etiketten und dem Untergrund verhältnismäßig gut ist, so dass eine unerwünschte Selbstablösung vermieden wird.

Während jedoch beim Abziehen von Etiketten eine Zugkraft auf die Etiketten ausgeübt wird, um den Kohäsionsbruch entlang der Spaltfront herbeizuführen, wird beim Ablösen mittels eines Fluidstrahls der Kohäsionsbruch bevorzugt dadurch hervorgerufen, dass ein Teil des Fluids in Bereiche zwischen jeweils zwei im Abstand voneinander angeordneten Kleberflächen gelenkt wird, in denen die Etiketten nicht am Untergrund haften. Das Fluid kann dort zwischen die Etikettenrückseite und den Untergrund eindringen, wodurch eine Kraft auf die Etikettenrückseite ausgeübt wird, die bewirkt, dass sich die Spaltmittelschicht an den benachbarten Rändern der Kleberflächen aufspaltet. Dabei bleiben die mit Spaltmittel bedeckten Kleberflächen auf dem Untergrund zurück, während die Etiketten zusammen mit dem übrigen Spaltmittel abgeführt werden.

Im Unterschied zum manuellen Abziehen von Etiketten, bei dem das anfängliche Ablösen und Ergreifen eines Etikettenrandes nicht selten etwas problematisch ist, wird durch das in die Zwischenräume zwischen zwei benachbarten Kleberflächen eindringende Fluid auch das Einleiten der Spaltung der Spaltmittelschicht am Rand der Etiketten erleichtert, ohne dass zuvor deren Haftung in diesem Bereich beeinträchtigt wird. Bei einem Kleberauftrag in Form von parallelen Raupen, wie er bereits bei vielen Flaschenetiketten üblich ist, um ein Übermaß an Kleber zwischen dem Untergrund und der Etikettenrückseite und damit ein Verrutschen der Etiketten bei feuchtem Kleber zu verhindern, wird das Fluid bevorzugt in einer zur Richtung der Kleberraupen parallelen Richtung auf die Etiketten gelenkt, d.h. bei Flaschenetiketten gewöhnlich in Umfangsrichtung der Flaschen.

Da der Kohäsionsbruch in der Spaltmittelschicht entlang einer zur Richtung des Fluidstrahls senkrechten Spaltfront fortschreitet, bleiben bei unveränderter Etikettenbreite die für eine Fortsetzung des Kohäsionsbruchs vom Fluidstrahl aufzubringenden Kräfte während der gesamten Ablösung der Etiketten im Wesentlichen gleich. Dies gestattet ein besonders energiearmes Ablösen, wenn die Auftreffgeschwindigkeit und die Auftreffkraft des Fluidstrahls pro Flächeneinheit gleich bleiben, was vorzugsweise dadurch erreicht werden kann, dass der Fluidstrahl der Trennlinie nachgeführt wird, zum Beispiel durch eine Relativbewegung zwischen einer Austrittsöffnung des Fluidstrahls und dem Untergrund, an dem die Etiketten haften.

Zum Ablösen der Etiketten kann grundsätzlich sowohl ein flüssiger als auch ein gasförmiger Fluidstrahl verwendet werden, wobei ein gasförmiges Fluid bevorzugt wird, da in diesem Fall die Etiketten ohne eine nachfolgende Trocknung entsorgt oder dem Altpapier-Recycling zugeführt werden können. Außerdem können dann handelsübliche Luftmesservorrichtungen verwendet werden, wie sie bereits zum Entfernen von Banderolen von Flaschen verwendet werden. Außerdem kann der erzeugte Gasstrom zum Abführen der abgelösten Etiketten verwendet werden.

Demgegenüber bestünde bei einer Verwendung von wasserlöslichen Klebern zum Aufkleben der Etiketten auf Flaschen oder einen anderen für Wasser unempfindlichen Untergrund der Vorteil eines wässrigen Fluids darin, dass der Untergrund bereits bei der Ablösung der Etiketten mit Wasser benetzt wird, was ein anschließendes Entfernen des mit wasserunlöslichem Spaltmittel bedeckten Klebers erleichtert.

Eine weitere Ausgestaltung der Erfindung sieht vor, dass dazu Wasser zu den nicht von Spaltmittel bedeckten Rändern des Klebers zugeführt wird, um den Kleber unter dem Spaltmittel aufzulösen, bei Flaschen beispielsweise, indem diese in ein Reinigungsbad eingetaucht werden. Bei Versuchen mit üblichen Reinigungslaugen zur Entfernung von Flaschenetiketten wurde festgestellt, dass der Kleber und das restliche Spaltmittel sehr schnell von den Flaschenoberflächen abgelöst wurden. Bei Verwendung weniger aggressiver Reinigungsflüssigkeiten könnte jedoch gegebenenfalls vor einer Benetzung der Flaschen mit Reinigungsflüssigkeit das wasserunlösliche Spaltmittel auf mechanischem Wege, zum Beispiel mittels Bürsten, ganz oder teilweise von der Oberfläche des Klebers entfernt werden, um dessen Auflösen in der Reinigungsflüssigkeit zu beschleunigen.

Auch ein raupen- oder fleckenförmiges Auftragen des Klebers auf den Untergrund erleichtert das spätere Ablösen des Klebers in der Reinigungsflüssigkeit, weil dieser längere Angriffsfronten geboten werden.

Neben einer Verwendung auf Etiketten oder Tapeten ist ein Einsatz des erfindungsgemäßen Spaltmittels auch an anderer Stelle möglich. Zum Beispiel können nicht wiederverschließbare Klebeverschlüsse von Verpackungen oder dergleichen mit einer Spaltmittelschicht zwischen dem Kleber und dem Verschluss, beispielsweise einer Klebelasche, versehen werden, um ein Abziehen des Verschlusses mit definierter Abziehkraft und ohne Zerreißen desselben zu ermöglichen. Ein Beispiel sind Aufkleber auf der oberen Stirnseite von Kaffee enthaltenden Vakuumverpackungen, welche mit einem Heißsiegelkleber auf nach innen gefaltete Randteile der Verpackung aufgeklebt sind, um diese auf der Stirnseite festzuhalten. Diese Aufkleber können vor der Beschichtung mit dem Heißsiegelkleber mit dem erfindungsgemäßen Spaltmittel beschichtet werden, um auch bei weniger reißfesten Aufklebern aus Papier ein Zerreißen der Aufkleber beim Abziehen zu vermeiden.

Ein weiteres Anwendungsbeispiel sind die Folienverschlüsse, die unter einem Schraubdeckel auf einen oberen Umfangsrand von Glasbehältern für Instant-Suppen oder dergleichen aufgeklebt sind, um das Eindringen von Feuchtigkeit zu verhindern, das Aroma zu bewahren und die Unversehrtheit des Verschlusses beim erstmaligen Öffnen zu dokumentieren. Diese ebenfalls mittels Heißsiegelkleber angebrachten Folieverschlüsse lassen sich aufgrund der guten Haftung des Klebers am Glas und an der Folie häufig nur unvollständig entfernen. Hier kann ebenfalls eine Spaltmittelschicht zwischen dem Kleber und der Folie vorgesehen werden, die ein vollständiges und einfaches Abziehen der Folie gestattet. Ähnliches gilt auch für Sicherungsetiketten auf Deckelgläsern für höherwertige Konsumgüter, wie Honig, die sich von entgegengesetzten Umfangsflächen über den Deckel erstrecken und auf diesem festgeklebt sind.

Im folgenden wird die Erfindung anhand von einigen in der Zeichnung dargestellten Ausführungsbeispielen näher erläutert.
Es zeigen:
Fig. 1: einen Querschnitt durch ein erfindungsgemäßes Etikett;
Fig. 2: einen Querschnitt entsprechend Fig. 1 nach dem Aufkleben auf eine nur teilweise dargestellte Flasche;
Fig. 3: einen Querschnitt entsprechend Fig. 2 beim Abziehen von der Flasche;
Fig. 4: eine schematische Draufsicht von oben auf einen Teil einer Etikettenablösestation zum Ablösen der erfindungsgemäßen Klebeetiketten von Flaschen mittels eines Luftstrahls;
die Figuren 5 bis 8: vergrößerte Querschnittsansichten der Flaschen und eines zur Erzeugung des Luftstrahls dienenden Luftmessers in unterschiedlichen Stadien beim Ablösen der Etiketten;
Fig. 9: eine vergrößerte Querschnittsansicht entlang der Linie IX-IX der Fig. 6;
die Figuren 10a und 10b: jeweils einen vergrößerten Ausschnitt A aus Fig. 9 in zwei anderen Stadien des Ablösevorgangs zur Erläuterung desselben.

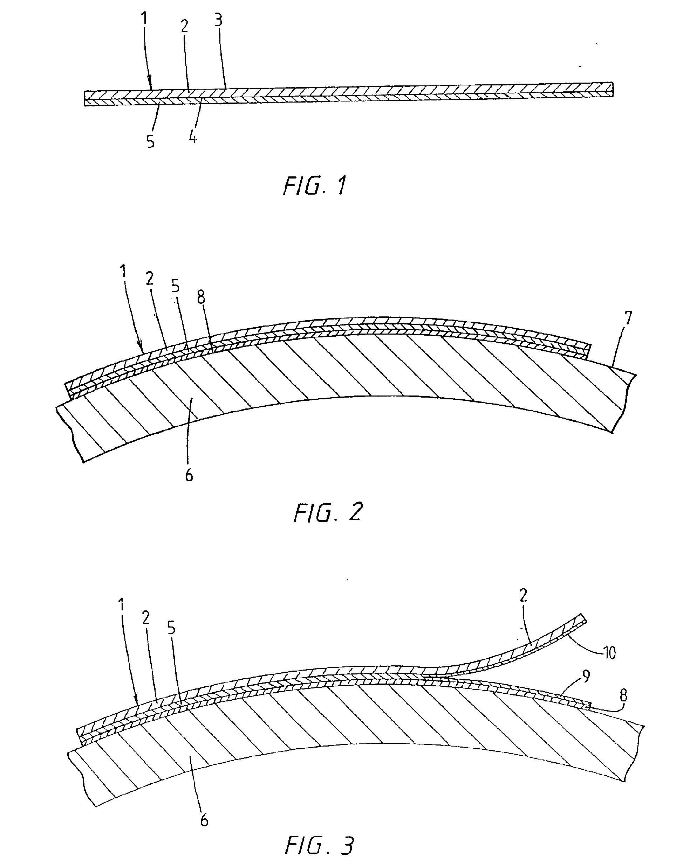

Das in Fig. 1 der Zeichnung dargestellte erfindungsgemäße Etikett 1 besteht im Wesentlichen aus einem Substrat 2 in Form eines Zuschnitts aus Papier oder einem anderen bahn- oder bogenförmigen Schichtmaterial, wie zum Beispiel Kunststoff- oder Metallfolie, der eine Sicht- oder Vorderseite 3 und eine dazu entgegengesetzte Klebe- oder Rückseite 4 aufweist, und auf der Klebe- oder Rückseite 4 ganzflächig mit einem Spaltlack 5 beschichtet ist, um das Ablösen des Etiketts 1 von einem Gegenstand, wie beispielsweise einer in Fig. 2 zum Teil dargestellten Flasche 6 zu erleichtern. Sowohl die Sicht- oder Vorderseite 3 als auch die Klebe- oder Rückseite 4 des Etiketts 1 weisen aufgedruckte Informationen (nicht dargestellt) auf. Die Informationen auf der Klebe- oder Rückseite 4 sind unmittelbar auf das Substrat 2 aufgedruckt und sind mit dem transparenten Spaltlack 5 überzogen, so dass sie durch den Spaltlack 5 hindurch gut lesbar sind.

Fig. 2 zeigt das Etikett 1 nach dem Aufkleben auf eine gerundete Umfangsfläche 7 der Flasche 6 mittels eines Klebers 8 auf Wasserbasis. Derartige Dispersionskleber 8 sind auf dem Gebiet der Etikettierung von Flaschen 6, Eierkartons oder anderen Konsumgütern mit nicht abziehbaren Klebeetiketten 1 bekannt und werden dort gewöhnlich verwendet, wenn gute Hafteigenschaften, d.h. große Adhäsionskräfte zwischen dem Etikett 1 und der Oberfläche 7 erwünscht sind.

Der Spaltlack 5 besteht im Wesentlichen aus zwei Komponenten, von denen die erste, ein weiches modifiziertes Styrol-Acrylat-Copolymer mit wasserabweisenden Eigenschaften beim Aufkleben des Etiketts 1 einen Kontakt des wässrigen Klebers 8 mit dem Substrat 2 verhindern soll, und von denen die zweite, Calciumstearat, dazu dient, dem Spaltlack 5 eine verhältnismäßig geringe innere Kohäsion zu verleihen, die kleiner ist als die Adhäsion des Klebers 8 an der Oberfläche 7, kleiner als die Adhäsion des Klebers 8 am Spaltlack 5 und kleiner als die Adhäsion des Spaltlacks 5 an der Etikettenrückseite 4, so dass beim Abziehen des Etiketts 1 von der Oberfläche 7 die Trennung oder Ablösung nicht wie im Stand der Technik an einer Grenzfläche zwischen zwei verschiedenen Stoffen erfolgt, sondern durch Kohäsionsbruch innerhalb des Spaltlacks 5. Dies hat zur Folge, dass sich der Spaltlack 5 beim Abziehen des Etiketts 1 parallel zur Etikettenrückseite in zwei getrennte Spaltlackschichten 9, 10 aufspaltet, von denen die eine (9) am Kleber 8 und damit an der Oberfläche 7 haften bleibt, während die andere (10) an der Rückseite 4 des Klebeetiketts 1 haften bleibt und zusammen mit diesem abgezogen wird, wie in Fig. 3 dargestellt.

Die beiden Spaltlackschichten 9 und 10 weisen jeweils eine Schichtdicke auf, die in etwa die Hälfte der ursprünglichen Schichtdicke des Spaltlacks 5 beträgt.

Versuche im Hinblick auf eine mögliche Beschriftung der Spaltlackschicht 10 auf der Etikettenrückseite 4, zum Beispiel zum Ausfüllen eines unter dem Spaltlack 5 auf die Etikettenrückseite 4 aufgedruckten Preisausschreibens, haben gezeigt, dass die mit dem Spaltlack 5 überzogene Etikettenrückseite 4 mit üblichen Schreibgeräten, zum Beispiel mit einem Bleistift, einem Kugelschreiber oder mit einem wasserfesten Filzstift, dauerhaft und wischfest beschriftet werden kann.

Die Beschichtung mit dem Spaltlack 5 erfolgt im Zuge der Etikettenherstellung nach einem Bedrucken der Rückseite 4 des bahn- oder bogenförmigen Schichtmaterials, aus dem später das Etikett 1 ausgestanzt wird. Zweckmäßig wird die Beschichtung mit dem Spaltlack 5 unmittelbar nach dem Bedrucken des Substrats 2 in der zum Bedrucken verwendeten Druckmaschine vorgenommen, wo der Spaltlack 5 auf die noch druckfeuchte Druckfarbe aufgetragen wird.

Die Verarbeitung des Spaltlacks 5 in der Druckmaschine erfolgt in Form einer wässrigen Dispersion des Styrol-Acrylat-Polymers und des zugemischten Calciumstearats mit einem Feststoffgehalt zwischen 35 und 60 Gew.-%, vorzugsweise zwischen 46 und 50 Gew.-% bezogen auf die Dispersion, einem pH-Wert zwischen 7, 8 und 8,5, vorzugsweise zwischen 8,0 und 8,3, einer Dichte von etwa 1,04 g/cm³ und einer Fließviskosität zwischen 20 und 60 sec, vorzugsweise zwischen 30 und 40 sec (20°C / DIN 4 mm-Becher). Der Gewichtsanteil des Styrol-Acrylat-Polymers bezogen auf das Gesamtgewicht der Feststoffe in der Dispersion beträgt ca. 40 bis 60 Gew.-%, derjenige des Calciumstearats entsprechend 60 bis 40 Gew.-%. Eine derartige Dispersion wird nach dem Prioritätstag dieser Patentanmeldung unter der Bezeichnung Aquaprint AH 571 von der Fa. Aquaprint GmbH, 27367 Reeßum, DE erhältlich sein und wird vorzugsweise in einer Menge von 5 bis 10 g/m² auf die nasse Druckfarbe aufgebracht.

Das Aufbringen der Dispersion kann mit sämtlichen gebräuchlichen Druckverfahren erfolgen, wie beispielsweise im Offset-, Flexo- oder Tiefdruck, wobei es vorzugsweise nass in nass in einem Durchlauf mit dem Druckvorgang erfolgt. Zu diesem Zweck ist die Spaltlack-Dispersion Aquaprint AH 571 zusätzlich mit einigen Additiven ausgestattet, welche die Benetzung der nassen Druckfarben und die Laufeigenschaften in der Druckmaschine verbessern. Die letztere kann zum Aufbringen der Dispersion entweder mit einer zusätzlichen, aus einem Behälter mit Dispersion gespeisten Auftrags- oder Rasterwalze versehen werden oder alternativ eine den Druckwerken nachgeschaltete, mit Dispersion gespeiste Lackier- oder Streicheinheit umfassen.

Während der Spaltlack 5 bereits beim Hersteller des Schichtmaterials auf dieses oder vorzugsweise im Zuge des Bedruckens der Etiketten 1 in einer Druckerei auf das Substrat 2 aufgebracht wird, erfolgt der Auftrag des Klebers 8 normalerweise beim Erzeuger der zu etikettierenden Flaschen 6 oder anderen Gegenstände unmittelbar vor dem Aufkleben der zuvor ausgestanzten Etiketten 1. Der Kleber 8 kann dabei wahlweise auf die Oberfläche 7 der Flaschen 6 oder anderen Gegenstände oder auf die mit dem Spaltlack 5 beschichtete Etikettenrückseite 4 aufgebracht werden, bevor das Etikett 1 durch Andrücken gegen die Oberfläche 7 festgeklebt wird.

Bei einem Einsatz des Spaltlacks 5 zur Rückseitenbeschichtung von Selbstklebeetiketten wird der Kleber 8 jedoch stets auf die mit dem Spaltlack 5 beschichtete Rückseite 4 des Schichtmaterials aufgetragen, bevor dieses auf ein handelsübliches Trägersubstrat (nicht dargestellt) aufgeklebt wird, von dem es sich wieder leicht ablösen lässt. Um beim Abziehen der Selbstklebeetiketten vom Trägersubstrat einen Kohäsionsbruch innerhalb des Spaltlacks 5 zu vermeiden, muss die Adhäsion des Klebers 8 an der Oberfläche des Trägersubstrats geringer als die innere Kohäsion des Spaltlacks 5 sein.

Bei einem Einsatz des Spaltlacks 5 zur Rückseitenbeschichtung von bedruckten Tapeten wird der Lack 5 vorzugsweise im Zuge des Bedruckens ganzflächig auf die Rückseite einer endlosen Tapetenbahn aufgebracht, wie im Zusammenhang mit Etiketten beschrieben. Bei einem Einsatz auf unbedruckten Rauhfaser- oder anderen Strukturtapeten erfolgt die Beschichtung mit dem Spaltlack hingegen vorzugsweise bei der Herstellung der Tapete in feuchtem Zustand, bevor die beschichtete endlose Tapetenbahn getrocknet und in handelsübliche Bahnstücke geschnitten wird, die anschließend aufgerollt und verpackt werden.

Beim Tapezieren wird der verwendete Kleber, vorzugsweise ein mit Wasser angerührter Kleister auf Stärkebasis, auf den oben im Zusammenhang mit Etiketten genannten wasserabweisenden Spaltlack 5 auf der Rückseite einer zugeschnittenen Tapetenbahn aufgestrichen und anschließend die Tapetenbahn auf den vorhandenen Untergrund aufgeklebt. Wegen der wasserabweisenden Eigenschaften des Spaltlacks 5 sind dabei keine Wartezeiten erforderlich.

Beim Abziehen der aufgeklebten Etiketten 1 zum Lesen der auf die Rückseite 4 aufgedruckten Informationen oder beim Abziehen der Tapetenbahnen vom Untergrund 6 wird das Substrat 2 zweckmäßig an einer Ecke oder an einem Rand mit dem Fingernagel oder dergleichen etwas vom Untergrund 6 gelöst, um es zum Abziehen zu ergreifen. Anschließend werden die Etiketten 1 oder Tapetenbahnen abgezogen, die letzteren vorzugsweise in ihrer Längsrichtung, wobei sich der Spaltlack 5 durch Kohäsionsbruch in zwei Spaltlackschichten 9, 10 trennt, von denen eine am Untergrund 6 bzw. am verwendeten Kleber oder Kleister 8 haften bleibt, während die andere auf der Rückseite 4 der Etiketten 1 oder Tapetenbahnen verbleibt und zusammen mit diesen abgezogen wird.

Zur Ermittlung der Kohäsionskraft des oben genannten Spaltlacks 5 wurde ein zuvor auf seiner Rückseite 4 mit diesem Spaltlack 5 beschichtetes Flaschenetikett 1 mit einem handelsüblichen Kleber 8 auf Wasserbasis auf eine Glasflasche 6 aufgeklebt und anschließend abgezogen, wobei die zum Abziehen in Umfangsrichtung bzw. in axialer Richtung der Flasche 6 erforderlichen Abziehkräfte mehrmals gemessen wurden. Die Zugrichtung wurde entsprechend üblichen Zugrichtungen beim Abziehen von Etiketten oder Tapetenbahnen so gewählt, dass der Winkel zwischen einem bereits abgezogenen Etikettenteil und einem noch auf der Flasche 6 klebenden Etikettenteil zwischen 30 und 60 Grad betrug. Der aus den Messwerten berechnete Mittelwert der gemessenen Abziehkräfte und damit die Kohäsionskraft des Spaltlacks 5 betrug in Umfangsrichtung der Flasche 0,15 N pro cm Etikettenbreite, während die Abziehkraft in Längsrichtung der Flasche bedingt durch die Krümmung der Abziehfront mit etwa 1 N pro cm Etikettenbreite etwas größer war. Als Etikettenbreite wird dabei die Abmessung der Etiketten quer zur Zugrichtung bezeichnet.

Der für Tapetenbahnen verwendete Spaltlack kann ähnliche Kohäsionskräfte zwischen 0,1 N pro cm Bahnbreite und 0,4 N pro cm Bahnbreite aufweisen, da diese Werte einerseits selbst bei schweren Tapeten für eine ausreichende Haftung sorgen und ein ungewolltes Ablösen der Tapeten verhindern und andererseits erheblich geringer sind als die Reißfestigkeit handelsüblicher Tapeten in trockenem Zustand, so dass diese selbst dann, wenn sie an den Rändern leicht eingerissen sind, noch im Wesentlichen in einem Stück abgezogen werden können.

Der erfindungsgemäße Spaltlack 5 kann auch zur Beschichtung der Rückseiten von gewöhnlichen Klebeetiketten 1 verwendet werden, die nicht auf der Rückseite 4 beschriftet sind. In diesem Fall ist es möglich, die Etiketten 1 trocken und vollständig vom Untergrund abzulösen, ohne dass Rückstände des Substrats 2 auf dem Untergrund zurückbleiben.

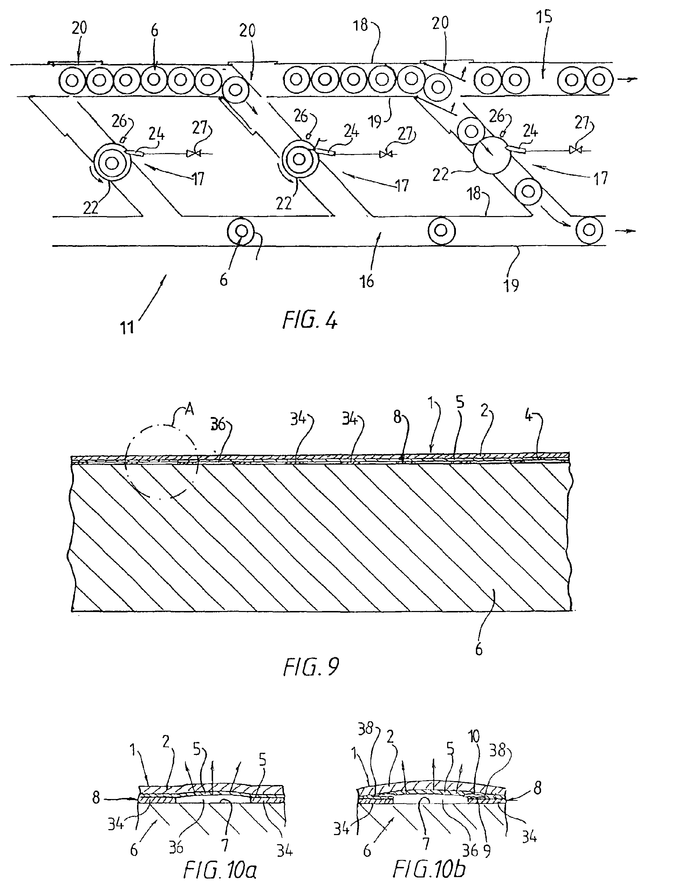

Ein derartiges trockenes Ablösen der Etiketten 1 von den zylindrischen Umfangsflächen 7 von Flaschen 6 aus Glas oder PET vor deren Reinigung wird anhand einer in Fig. 4 teilweise dargestellte Etikettenablösestation 11 beispielhaft erläutert. Die Station 11 besteht im Wesentlichen aus zwei parallelen Flaschenförderern 15, 16 zum Transport der Flaschen 6 sowie mehreren hintereinander zwischen den beiden Flaschenförderern 15, 16 angeordneten Etikettenablösevorrichtungen 17.

Der Aufbau der Flaschenförderer 15, 16 entspricht im Wesentlichen demjenigen üblicher Flaschenförderer, auf denen eine einzelne Reihe von Flaschen 6 zwischen zwei seitlichen Begrenzungen 18, 19 aufrecht stehend vorwärtsbewegt wird. Die Förderer 15, 16 können beispielsweise als Rollenbahn mit einer Vielzahl angetriebener Rollen ausgebildet sein.

Im Bereich von jeder der Etikettenablösevorrichtungen 17 weist der erste Förderer 15 jeweils eine Flaschenweiche 20 auf (in Fig. 4 in unterschiedlichen Stellungen dargestellt), mit der einzelne Flaschen 6 aus dem geförderten Flaschenstrom in die jeweiligen Etikettenablösevorrichtungen 17 ausgeschleust werden können, kurz bevor eine dort befindliche Flasche 6 nach dem Ablösen ihres Etiketts 1 oder ihrer Etiketten zum Förderer 16 weitertransportiert wird.

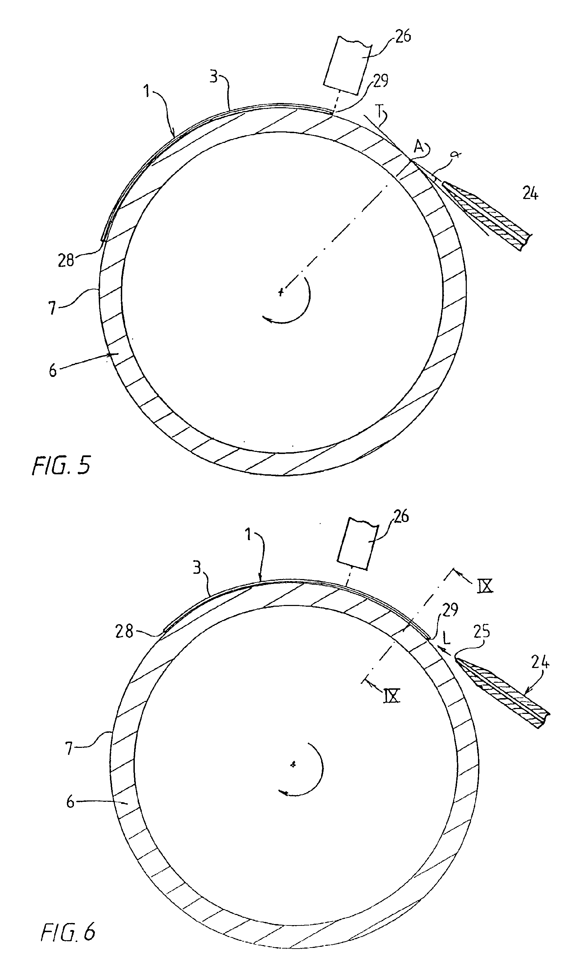

Die Etikettenablösevorrichtungen 17 bestehen im Wesentlichen aus einem Drehteller 22 und einem vertikal beweglichen Niederhalter (nicht dargestellt), zwischen denen jeweils eine Flasche 6 um ihre vertikale Längsmittelachse drehbar festgehalten werden kann, einem Antrieb (nicht dargestellt) zum Drehen des Drehtellers 22, des Niederhalters und einer dazwischen festgehaltenen Flasche 6, einem mit Druckluft beaufschlagbaren Luftmesser 24 mit einer vertikal ausgerichteten schlitzförmigen Luftaustrittsöffnung 25 (vgl. Fig. 6), die sich in einem vorgegebenen Abstand von der Umfangsfläche 7 einer zwischen Drehteller 22 und Niederhalter gehaltenen Flasche 6 über die gesamte Höhe des jeweiligen Etiketts 1 erstreckt, sowie einem in Drehrichtung der Flaschen 6 vor dem Luftmesser 24 angeordneten Etikettensensor 26, der zur Steuerung der Luftzufuhr zum Luftmesser 24 dient.

Das Luftmesser 24 weist einen an sich bekannten Aufbau auf, wobei seine Luftaustrittsöffnung 25 so angeordnet ist, dass in der Querschnittsansicht der Figuren 5 bis 8 ein aus der Luftaustrittsöffnung 25 in Richtung der Flaschenumfangsfläche 7 emittierter Luftstrahl L an seinem Auftreffpunkt A auf der Umfangsfläche 7 einen Winkel α von etwa 10 Grad mit der Tangente T im Auftreffpunkt A einschließt (vergleiche Fig. 5). Das Luftmesser 24 wird aus einer Druckluftquelle (nicht dargestellt) mit Druckluft gespeist, wenn ein zwischen der Druckluftquelle und dem jeweiligen Luftmesser 24 angeordnetes Ventil 27 durch ein Signal des Etikettensensors 26 geöffnet wird.

Der Etikettensensor 26 kann zum Beispiel ein optischer Sensor sein, von dem ein Lichtstrahl radial in Richtung der Flaschenumfangsflächen 7 gelenkt und die Intensität des reflektierten Lichts gemessen wird. Dabei wird der unterschiedliche Reflexionsgrad der Etiketten 1 und der Flaschenoberfläche 7 ausgenutzt, um den Zeitpunkt zu ermitteln, in dem sich ein in Drehrichtung vorderer Rand 29 der Etiketten 1 vor dem Sensor 26 vorbeibewegt.

Sobald sich eine der aus dem Förderer 15 ausgeschleusten Flaschen 6 auf dem Drehteller 22 befindet und vom Niederhalter auf diesem festgehalten wird, wird der Drehteller 22 mit dem Niederhalter und der Flasche 6 in Drehung versetzt, wobei sich die Umfangsfläche 7 der Flasche 6 in einem geringen Abstand an der Luftaustrittsöffnung 25 entlang bewegt. Sobald der vordere Rand 29 des Flaschenetiketts 1 den Sensor 26 passiert, wird das Ventil 27 zwischen der Druckluftquelle und dem Luftmesser 24 geöffnet und das letztere mit Druckluft beaufschlagt, um das Flaschenetikett 1 mittels des aus der Luftaustrittsöffnung 25 ausgestoßenen scharf gebündelten Luftstrahls L trocken von der Flasche 6 abzulösen.

Sobald sich der in Drehrichtung hintere Rand 28 der Etiketten 1 am Luftmesser 24 vorbei bewegt hat, wird das Ventil 27 geschlossen, der Drehantrieb des Drehtellers 22 abgeschaltet und die Flasche 6 vom Drehteller 22 herab in Richtung des Förderers 16 transportiert. Dieser Vorgang erfolgt in einem vorbestimmten Zeitabstand nach dem Öffnen des Ventils 27, wobei sich der richtige Zeitabstand aus der Umfangsgeschwindigkeit der Flaschen 6 und der Breite der Etiketten 1 berechnen und in Abhängigkeit von der letzteren verändern lässt.

Im Unterschied zu dem in den Figuren 1 bis 3 dargestellten Etikett 1 wird der Kleber 8 bei den in den Figuren 9 und 10 dargestellten Etiketten 1 beim Aufkleben der Etiketten 1 nicht ganzflächig sondern in Form von parallelen Kleberraupen 34 auf die Rückseiten 4 der Etiketten 1 aufgebracht. Die Kleberraupen 34 sind in Umfangsrichtung der Flaschen 6 ausgerichtet, so dass sie parallel zur Drehrichtung verlaufen, wenn die Umfangsflächen 7 der Flaschen 6 auf dem Drehteller 22 am Luftmesser 24 vorbeibewegt werden.

Um das Ablösen der aufgeklebten Etiketten 1 vor einer erneuten Befüllung der Flaschen 6 zu erleichtern, wurden beim Bedrucken der Etiketten 1, d.h. vor dem Aufbringen des Klebers 8, die Etikettenrückseiten 4 ganzflächig mit dem Spaltlack 5 beschichtet, der sich unter der Einwirkung von Zug- oder Scherkräften durch Kohäsionsbruch aufspaltet, wie zuvor beschrieben.

Im Unterschied zu dem zuvor beschriebenen manuellen Abziehen der Etiketten 1 werden die zum Ablösen der Etiketten benötigten Zug- bzw. Scherkräfte hier durch den aus der Luftaustrittsöffnung 25 austretenden Luftstrahl L aufgebracht. Aufgrund der Ausrichtung der Luftaustrittsöffnung 25 wird der Luftstrahl L zwischen die Etiketten 1 und die Umfangsfläche 7 der Flaschen 6 auf den Spaltlack 5 gelenkt, um diesen zu spalten und durch diese Spaltung die Etiketten 1 von den Flaschen 6 abzulösen.

Die ganzflächig auf die Rückseite 4 der Etiketten 1 aufgebrachte Spaltlackschicht 5 in Verbindung mit den später aufgebrachten, in Drehrichtung der Flaschen ausgerichteten Kleberraupen 34 erleichtert es, die Aufspaltung der Spaltlackschicht 5 am vorderen Rand 29 der Etiketten 1 einzuleiten, ohne zuvor die Haftung der Etiketten 1 an der Umfangsfläche 7 im Bereich dieses Randes 29 zu beeinträchtigen. Wenn nämlich der Luftstrahl L unter einem flachen Winkel kurz vor dem vorderen Rand 29 der Etiketten 1 auf die Umfangsfläche 7 der Flaschen 6 auftrifft (Fig. 6), wird ein Teil der Luft entlang der Umfangsfläche 7 zum Rand 29 hin umgelenkt und dringt dort in den Zwischenräumen 36 zwischen jeweils zwei benachbarten Kleberraupen 34, in denen die Spaltlackschicht 5 nicht am Kleber 8 haftet, zwischen den Spaltlack 5 und die Umfangsfläche 7 der Flaschen 6 ein. In dem an den Rand 29 angrenzenden Bereich dieser Zwischenräume 36 werden die Etiketten 1 durch die eingedrungenen Luft von der Umfangsfläche 7 der Flaschen 6 abgehoben und radial nach außen gedrückt, wie in Fig. 10a dargestellt. Sobald die an den Rändern der Kleberraupen 34 auf die Spaltlackschicht 5 ausgeübten Zugkräfte die innere Kohäsion des Spaltlacks 5 übersteigen, wird entlang dieser Ränder die Spaltung des Spaltlacks 5 eingeleitet. Wie in Fig. 10b dargestellt, spaltet sich dort der Spaltlack 5 entlang einer in Drehrichtung fortschreitenden Spaltfront 38 auf, wobei ein Teil 9 des Spaltlacks 5 an der von der Umfangsfläche 7 der Flaschen 6 abgewandten Oberfläche der Kleberraupen 34 haften bleibt und diese bedeckt. Während dieser Teil 9 des Spaltlacks 5 zusammen mit dem Kleber 8 auf der Flasche 6 zurückbleibt, bleibt der Rest 10 des Spaltlacks 5 auf den Etikettenrückseiten 4 haften und wird zusammen mit den vom Luftstrom mitgerissenen abgelösten Etiketten 1 abgeführt.

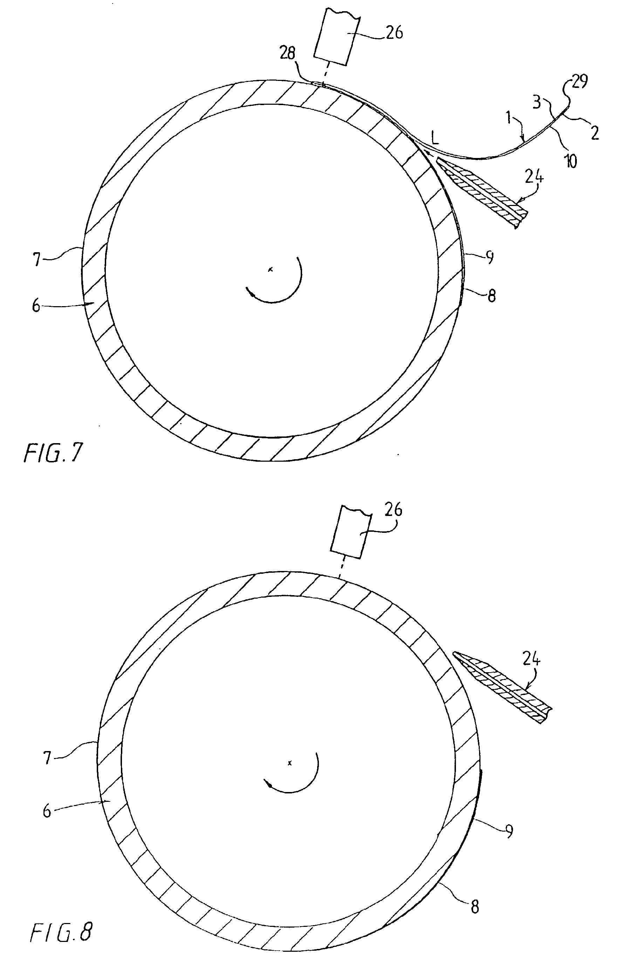

Während die Etiketten 1 anschließend weiter am Luftmesser 24 vorbeibewegt werden, schreitet die Spaltfront 38 mit gleicher Geschwindigkeit durch die Spaltlackschicht 5 fort, wobei die Etiketten 1 über ihre gesamten Höhe von den Flaschen 6 gelöst werden. Der vordere Rand 29 der Etiketten 1 wird dabei durch den Luftstrahl L von der Umfangsfläche 7 weg nach außen umgebogen, wie in Fig. 7 dargestellt. Wenn die Spaltfront 38 den hinteren Rand 28 der Etiketten 1 erreicht, werden die Etiketten 1 vom Luftstrahl L mitgerissen, bevor kurz danach die Luftzufuhr zum Luftmesser 24 unterbrochen wird.

An Stelle eines Auftrags des Klebers 8 in Form von parallelen Kleberraupen 34 auf die Spaltlackschicht 5 beim Aufkleben der Etiketten 1 ist auch ein punktförmiger Auftrag des Klebers 8 in Form von rasterartig verteilten kleinen Kleberflecken möglich, zwischen denen ebenfalls Luft unter den Spaltlack 5 eindringen kann.

Nach dem Ablösen der Etiketten 1 werden die Flaschen 6 mit den ganz vom Spaltlack 10 bedeckten Kleberraupen 34 auf dem Förderer 16 in ein Tauchbad mit heißer wässriger Reinigungsflüssigkeit gefördert, in dem der wasserlösliche Kleber 8 aufgelöst und dadurch von der Umfangsfläche 13 der Flaschen 6 entfernt wird. Um Verzögerungen beim Auflösen des Klebers 8 infolge der darüber angeordneten wasserunlöslichen Spaltlackschicht 10 zu vermeiden, können entlang des Förderers 16 Bürsten (nicht dargestellt) vorgesehen sein, um einen Teil des Spaltlacküberzugs 10 auf den Kleberraupen 34 mechanisch zu entfernen.

## Patentansprüche

1. Verfahren zur Herstellung von Zuschnitten (1) aus einem Schichtmaterial, umfassend ein bedruckbares Substrat (2), zum Aufkleben auf einen Untergrund (6), insbesondere zur Herstellung von Klebeetiketten (1) oder Klebetapeten, bei dem auf eine dem Untergrund (6) zugewandte Rückseite (4) des Substrats (2) ein Spaltmittel (5) aufgetragen wird, das sich bei einem späteren Ablösen der aufgeklebten Schichtmaterialzuschnitte (1) vom Untergrund (6) durch Kohäsionsbruch aufspaltet, wobei auf dem Untergrund (6) ein zum Aufkleben der Zuschnitte (1) verwendeter, von einer Schicht (9) des Spaltmittels (5) bedeckter Kleber (8) zurückbleibt, während sich das Substrat (2) mit dem Rest (10) des Spaltmittels (5) vollständig vom Untergrund (6) löst, wobei das Spaltmittel (5) als eine erste Komponente eine Polymerdispersion und als eine zweite Komponente einen anionischen Emulgator umfasst.

2. Verfahren nach Anspruch 1, **dadurch gekennzeichnet, dass** das Substrat (2) auf der gesamten Rückseite (4) der Zuschnitte (1) mit dem Spaltmittel (5) beschichtet wird, um einen direkten Kontakt zwischen dem Kleber (8) und den Zuschnitten (1) zu verhindern.

3. Verfahren nach Anspruch 1 oder 2, **dadurch gekennzeichnet, dass** das Spaltmittel (5) als wässrige Dispersion auf die Rückseite (4) des Substrats (2) aufgebracht und anschließend zusammen mit diesem getrocknet wird.

4. Verfahren nach einem der Ansprüche 1 bis 3, insbesondere zur Herstellung von Selbstklebeetiketten, **dadurch gekennzeichnet, dass** der Kleber (8) auf das Spaltmittel (5) aufgebracht wird und dass das Schichtmaterial oder die Schichtmaterialzuschnitte (1) anschließend auf einen Träger aufgeklebt werden, dessen Adhäsion am Kleber (8) geringer als die Kohäsion des Spaltmittels (5) ist, so dass sich die Schichtmaterialzuschnitte (1) vor dem Aufkleben auf den Untergrund (6) zusammen mit dem Spaltmittel (5) und dem Kleber (8) vom Träger abnehmen lassen.

5. Verfahren zum Aufkleben von Zuschnitten (1) aus einem Schichtmaterial, umfassend ein bedruckbares Substrat (2), auf einen Untergrund (6), insbesondere zum Aufkleben von Klebeetiketten (1) oder Klebetapeten, wobei das Substrat (2) auf seiner dem Untergrund (6) zugewandten Rückseite (4) mit einem Spaltmittel (5) beschichtet ist, das sich bei einem späteren Ablösen der Zuschnitte (1) vom Untergrund (6) durch Kohäsionsbruch aufspaltet, wobei auf dem Untergrund (6) ein zum Aufkleben der Zuschnitte (1) verwendeter, von einer Schicht (9) des Spaltmittels (5) bedeckter Kleber (8) zurückbleibt, während sich das Substrat (2) mit dem Rest (10) des Spaltmittels (5) vollständig vom Untergrund (6) löst, wobei das Spaltmittel (5) als eine erste Komponente ein Polymer und als eine zweite Komponente einen anionischen Emulgator umfasst.

6. Verfahren nach Anspruch 5, **dadurch gekennzeichnet, dass** die Schichtmaterialzuschnitte (1) mit einem wasserhaltigen Kleber (8) aufgeklebt werden, und dass die Rückseite (4) des Substrats (2) mit einem wasserabweisenden oder feuchtigkeitsbeständigen Spaltmittel (5) beschichtet ist, um ein Vordringen des Klebers (8) durch das Spaltmittel (5) bis zum Schichtmaterial zu verhindern.

7. Verfahren nach Anspruch 5 oder 6, insbesondere zum Etikettieren von Gegenständen (6) mit Selbstklebeetiketten, **dadurch gekennzeichnet, dass** die Schichtmaterialzuschnitte (1) von einem Träger abgenommen werden, auf den sie zuvor mittels des auf das Spaltmittel (5) aufgebrachten Klebers (8) aufgeklebt werden, wobei die Adhäsion des Klebers (8) am Träger geringer ist als die Kohäsion des Spaltmittels (5), so dass die Schichtmaterialzuschnitte (1) zusammen mit dem Spaltmittel (5) und dem Kleber (8) vom Träger abgezogen werden.

8. Verfahren zum Ablösen von Zuschnitten (1) aus einem Schichtmaterial, umfassend ein bedruckbares Substrat (2), von einem Untergrund (6), insbesondere zum Ablösen von aufgeklebten Klebeetiketten, bei dem die Schichtmaterialzuschnitte (1) durch einen Fluidstrahl (L) abgelöst werden, der auf ein Spaltmittel (5) zwischen einer Rückseite (4) der Zuschnitte (1) und einem die Haftung der Zuschnitte (1) am Untergrund (6) bewirkenden Kleber (8) gelenkt wird, um das Spaltmittel (5) durch Kohäsionsbruch zu spalten, so dass auf dem Untergrund (6) der von einem Teil (9) des Spaltmittels (5) bedeckte Kleber (8) zurückbleibt, während sich das Substrat (2) mit dem Rest (10) des Spaltmittels (5) vollständig vom Untergrund (6) löst, wobei das Spaltmittel (5) als eine erste Komponente ein Polymer und als eine zweite Komponente einen anionischen Emulgator umfasst.

9. Verfahren nach Anspruch 8, bei dem mindestens ein Teil des Fluidstrahls (L) auf Bereiche des Spaltmittels (5) gelenkt wird, wo kein Kleber (8) zwischen dem Spaltmittel (5) und dem Untergrund (6) vorhanden ist.

10. Mittel zur Beschichtung der Rückseite (4) von Schichtmaterial, das in Form von Schichtmaterialzuschnitten (1) mittels eines Klebers (8) auf einen Untergrund (6) aufgeklebt und ggf. später vom Untergrund (6) abgelöst werden soll, insbesondere zur Rückseitenbeschichtung von Klebeetiketten (1) oder Klebetapeten, wobei das Mittel (5) als eine erste Komponente eine Polymerdispersion und als eine zweite Komponente einen anionischen Emulgator umfasst.

11. Mittel nach Anspruch 10, **dadurch gekennzeichnet, dass** das Mittel ein Spaltmittel (5) bildet, dessen innere Kohäsion im Verwendungszustand kleiner ist als eine Adhäsion des Spaltmittels (5) an der Rückseite (4) des Schichtmaterials (2) und kleiner als eine Adhäsion des Spaltmittels (5) an einem zum Aufkleben der Zuschnitte (1) verwendeten Kleber (8), so dass sich bei einem späteren Ablösen der Zuschnitte (1) vom Untergrund (6) das Spaltmittel (5) durch Kohäsionsbruch aufspaltet, wobei auf dem Untergrund (6) der von einer Schicht (9) des Spaltmittels (5) bedeckte Kleber (8) zurückbleibt, während sich das Substrat (2) mit dem Rest (10) des Spaltmittels (5) vollständig vom Untergrund (6) löst.

12. Mittel nach Anspruch 11, insbesondere zur Verwendung bei der Herstellung von Selbstklebeetiketten, die mittels des Klebers (8) auf ein Trägersubstrat aufgeklebt werden, von dem sie vor dem Aufkleben auf den Untergrund (6) wieder abgenommen werden, **dadurch gekennzeichnet, dass** die Kohäsion des Spaltmittels (5) größer ist als eine Adhäsion des Klebers (8) am Trägersubstrat, so dass sich der Kleber (8) beim Abnehmen der Zuschnitte (1) vom Trägersubstrat vollständig von diesem löst.

13. Mittel nach einem der Ansprüche 10 bis 12, **dadurch gekennzeichnet, dass** die Polymerdispersion eine wässrige Dispersion eines modifizierten Styrol-Acrylat-Copolymers ist, das in getrocknetem Zustand wasserabweisende Eigenschaften aufweist.

14. Mittel nach einem der Ansprüche 10 bis 13, **dadurch gekennzeichnet, dass** der anionische Emulgator eine Metallseife ist.

15. Mittel nach Anspruch 14, **dadurch gekennzeichnet, dass** die Metallseife Calciumstearat ist.

16. Mittel nach einem der Ansprüche 10 bis 15, **dadurch gekennzeichnet, dass** der Gewichtsanteil der Polymerdispersion zwischen 40 und 60 Gew.-% und der Gewichtsanteil der Metallseife zwischen 60 und 40 Gew.-% beträgt, bezogen auf das Gesamtgewicht der Feststoffe.

17. Mittel nach einem der Ansprüche 10 bis 16, **dadurch gekennzeichnet, dass** eine Abziehkraft zum Ablösen der aufgeklebten Schichtmaterialzuschnitte (1) unter Aufspaltung des Spaltmittels (5) durch Kohäsionsbruch in eine am Kleber haftende Spaltmittelschicht (9) und eine am Zuschnitt (1) haftende Spaltmittelschicht (10) von 0,05 N bis 5 N pro cm Schichtmaterialbreite und vorzugsweise von 0,1 bis 1 N pro cm Schichtmaterialbreite beträgt.

18. Schichtmaterialzuschnitt (1) zum Aufkleben auf einen Untergrund (6), insbesondere in Form eines Klebeetiketts (1) oder einer Klebetapete, umfassend ein bedruckbares Substrat (2) und ein auf dessen Rückseite (4) aufgebrachtes Mittel (5) zur Erleichterung eines späteren Ablösens vom Untergrund (6), wobei das Mittel ein Spaltmittel (5) ist, das im Verwendungszustand eine innere Kohäsion aufweist, die kleiner ist als eine Adhäsion des Spaltmittels (5) an der Rückseite (4) des Substrats (2) und kleiner als eine Adhäsion des Spaltmittels (5) an einem zum Aufkleben des Zuschnitts (1) verwendeten Kleber (8), so dass sich beim Ablösen des Zuschnitts (1) vom Untergrund (6) das Spaltmittel (5) durch Kohäsionsbruch aufspaltet, wobei auf dem Untergrund (6) der von einer Schicht (9) des Spaltmittels (5) bedeckte Kleber (8) zurückbleibt, während sich das Substrat (2) mit dem Rest (10) des Spaltmittels (5) vollständig vom Untergrund (6) löst, und wobei das Spaltmittel (5) als eine erste Komponente ein Polymer und als eine zweite Komponente einen anionischen Emulgator umfasst.

19. Gegenstand mit einem aufgeklebten Schichtmaterialzuschnitt (1), der ein bedruckbares Substrat (2) und ein auf dessen Rückseite (4) aufgebrachtes Spaltmittel (5) umfasst, das im Verwendungszustand eine innere Kohäsion aufweist, die kleiner ist als eine Adhäsion des Spaltmittels (5) an der Rückseite (4) des Substrats (2) und kleiner als eine Adhäsion des Spaltmittels (5) an einem zum Aufkleben des Zuschnitts (1) verwendeten Kleber (8), so dass sich beim Ablösen des Zuschnitts (1) vom Untergrund (6) das Spaltmittel (5) durch Kohäsionsbruch aufspaltet, wobei auf dem Untergrund (6) der von einer Schicht (9) des Spaltmittels (5) bedeckte Kleber (8) zurückbleibt, während sich das Substrat (2) mit dem Rest (10) des Spaltmittels (5) vollständig vom Untergrund (6) löst, und wobei das Spaltmittel (5) als eine erste Komponente ein Polymer und als eine zweite Komponente einen anionischen Emulgator umfasst.

20. Vorprodukt zur Herstellung von Schichtmaterialzuschnitten (1) zum Aufkleben auf einen Untergrund (6), bestehend aus einem Schichtmaterial, das ein bedruckbares Substrat (2) in Bahn- oder Bogenform umfasst, und einem auf die Rückseite (4) des Substrats (2) aufgebrachten Mittel (5) zur Erleichterung eines Abziehens der Schichtmaterialzuschnitte (1) vom Untergrund (6), wobei das Mittel ein Spaltmittel (5) ist, das im Verwendungszustand eine innere Kohäsion aufweist, die kleiner ist als eine Adhäsion des Spaltmittels (5) an der Rückseite (4) des Substrats (2) und kleiner als eine Adhäsion des Spaltmittels (5) an einem zum Aufkleben der Schichtmaterialzuschnitte (1) verwendeten Kleber (8), so dass sich beim Ablösen des Zuschnitts (1) vom Untergrund (6) das Spaltmittel (5) durch Kohäsionsbruch aufspaltet, wobei auf dem Untergrund (6) der von einer Schicht (9) des Spaltmittels (5) bedeckte Kleber (8) zurückbleibt, während sich das Substrat (2) mit dem Rest (10) des Spaltmittels (5) vollständig vom Untergrund (6) löst, und wobei das Spaltmittel (5) als eine erste Komponente ein Polymer und als eine zweite Komponente einen anionischen Emulgator umfasst.

## Claims

1. Method for manufacturing blanks (1) from a laminated material, comprising a printable substrate (2) to be stuck onto a base (6), in particular for manufacturing adhesive labels (1) or adhesive wallpapers, in which a parting agent (5) is applied to a rear side (4) of the substrate (2), facing the base (6), and parts as a result of cohesive failure during subsequent detachment of the stuck-on laminated material blanks (1) from the base (6), an adhesive (8) used for sticking the blanks (1) and covered by a layer (9) of the parting agent (5) remaining on the base (6), while the substrate (2), together with the residue (10) of the parting agent (5), is detached completely from the base (6), the parting agent (5) comprising a polymer dispersion as a first component and an anionic emulsifier as a second component.

2. Method according to Claim 1, **characterized in that** the substrate (2) is coated with the parting agent (5) on the entire rear side (4) of the blanks (1), in order to prevent direct contact between the adhesive (8) and the blanks (1).

3. Method according to Claim 1 or 2, **characterized in that** the parting agent (5) is applied as an aqueous dispersion to the rear side (4) of the substrate (2) and is subsequently dried together with the latter.

4. Method according to one of Claims 1 to 3, in particular for manufacturing self-adhesive labels, **characterized in that** the adhesive (8) is applied to the parting agent (5), and **in that** the laminated material or the laminated material blanks (1) are subsequently stuck onto a carrier whose adhesion to the adhesive (8) is lower than the cohesion of the parting agent (5), so that, before being stuck onto the base (6), the laminated material blanks (1), together with the parting agent (5) and the adhesive (8), can be removed from the carrier.

5. Method for sticking blanks (1) of a laminated material, comprising a printable substrate (2), to a base (6), in particular for sticking adhesive labels (1) or adhesive wallpapers, the substrate (2) being coated on the rear side (4), facing the base (6), with a parting agent (5) which parts as a result of cohesive failure during subsequent detachment of the blanks (1) from the base (6), an adhesive (8) used for sticking the blanks (1) and covered by a layer (9) of the parting agent (5) remaining on the base (6), while the substrate (2), together with the residue (10) of the parting agent (5), is detached completely from the base (6), the parting agent (5) comprising a polymer as a first component and an anionic emulsifier as a second component.

6. Method according to Claim 5, **characterized in that** the laminated material blanks (1) are stuck on with a water-containing adhesive (8), and **in that** the rear side (4) of the substrate (2) is coated with a water-repellent or moisture-resistant parting agent (5), in order to inhibit the adhesive (8) from penetrating through the parting agent (5) to the laminated material.

7. Method according to Claim 5 or 6, in particular for labelling objects (6) with self-adhesive labels, **characterized in that** the laminated material blanks (1) are removed from a carrier, to which they are previously stuck by means of the adhesive (8) applied to the parting agent (5), the adhesion of the adhesive (8) to the carrier being lower than the cohesion of the parting agent (5), so that the laminated material blanks (1), together with the parting agent (5) and the adhesive (8), are pulled off the carrier.

8. Method for detaching blanks (1) of a laminated material, comprising a printable substrate (2), from a base (6), in particular for detaching stuck-on adhesive labels, in which the laminated material blanks (1) are detached by a fluid jet (L) which is directed onto a parting agent (5) between a rear side (4) of the blanks (1) and an adhesive (8) effecting the adhesion of the blanks (1) to the base (6), in order to part the parting material (5) by means of cohesive failure, so that the adhesive (8) covered by part (9) of the parting agent (5) remains on the base (6), while the substrate (2), together with the residue (10) of the parting agent (5), is detached completely from the base (6), the parting agent (5) comprising a polymer as a first component and an anionic emulsifier as a second component.

9. Method according to Claim 8, in which at least part of the fluid jet (L) is directed at regions of the parting agent (5) where there is no adhesive (8) between the parting agent (5) and the base (6).

10. Agent for coating the rear side (4) of laminated material which, in the form of laminated material blanks (1), is to be stuck on to a base (6) by means of an adhesive (8) and optionally subsequently detached from the base (6), in particular for coating the rear side of adhesive labels (1) or adhesive wallpapers, the agent (5) comprising a polymer dispersion as a first component and an anionic emulsifier as a second component.

11. Agent according to Claim 10, **characterized in that** the agent forms a parting agent (5) whose internal cohesion when used is lower than an adhesion of the parting agent (5) to the rear side (4) of the laminated material (2) and lower than an adhesion of the parting agent (5) to an adhesive (8) used to stick the blanks (1) on, so that, during the subsequent detachment of the blanks (1) from the base (6), the parting agent (5) parts as a result of cohesive failure, the adhesive (8) covered by a layer (9) of the parting agent (5) remaining on the base (6), while the substrate (2), together with the residue (10) of the parting agent (5), is detached completely from the base (6).

12. Agent according to Claim 11, in particular for use in the manufacture of self-adhesive labels which are to be stuck by means of the adhesive (8) on to a carrier substrate, from which they are removed again before being stuck on to the base (6), **characterized in that** the cohesion of the parting agent (5) is greater than the adhesion of the adhesive (8) to the carrier substrate, so that, when the blanks (1) are removed from the carrier substrate, the adhesive (8) is detached completely from the latter.

13. Agent according to one of Claims 10 to 12, **characterized in that** the polymer dispersion is an aqueous dispersion of a modified styrene-acrylate copolymer which, in the dry state, exhibits water-repellent properties.

14. Agent according to one of Claims 10 to 13, **characterized in that** the anionic emulsifier is a metal soap.

15. Agent according to Claim 14, **characterized in that** the metal soap is calcium stearate.

16. Agent according to one of Claims 10 to 15, **characterized in that** the proportion by weight of the polymer dispersion is between 40 and 60% by weight and the proportion by weight of the metal soap is between 60 and 40% by weight, based on the total weight of the solids.

17. Agent according to one of Claims 10 to 16, **characterized in that** a pull-off force for detaching the stuck-on laminated material blanks (1) by parting the parting agent (5) as a result of cohesive failure in a parting agent layer (9) adhering to the adhesive and a parting agent layer (10) adhering to the blank (1) is from 0.05 N to 5 N per cm laminated material width and preferably from 0.1 to 1 N per cm laminated material width.

18. Laminated material blank (1) to be stuck onto a base (6), in particular in the form of an adhesive label (1) or an adhesive wallpaper, comprising a printable substrate (2) and an agent (5) applied to the rear side (4) of the latter in order to make subsequent detachment from the base (6) easier, the agent being a parting agent (5) which, when used, has an internal cohesion which is lower than the adhesion of the parting agent (5) to the rear side (4) of the substrate (2) and lower than the adhesion of the parting agent (5) to an adhesive (8) used to stick the blank (1) on, so that, when the blank (1) is detached from the base (6), the parting agent (5) parts as a result of cohesive failure, the adhesive (8) covered by a layer (9) of the parting agent (5) remaining on the base (6), while the substrate (2), together with the residue (10) of the parting agent (5), is detached completely from the base (6), and the parting agent (5) comprising a polymer as a first component and an anionic emulsifier as a second component.

19. Object having a stuck-on laminated material blank (1) which comprises a printable substrate (2) and a parting agent (5) which is applied to its rear side (4) and which, when used, has an internal cohesion which is lower than the adhesion of the parting agent (5) to the rear side (4) of the substrate (2) and lower than the adhesion of the parting agent (5) to an adhesive (8) used to stick the blank (1) on, so that, when the blank (1) is detached from the base (6), the parting agent (5) parts as a result of cohesive failure, the adhesive (8) covered by a layer (9) of the parting agent (5) remaining on the base (6), while the substrate (2), together with the residue (10) of the parting agent (5), is detached completely from the base (6), and the parting agent (5) comprising a polymer as a first component and an anionic emulsifier as a second component.

20. Pre-product for the manufacture of laminated material blanks (1) to be stuck onto a base (6), composed of a laminated material which comprises a printable substrate (2) in web or sheet form, and an agent (5) applied to the rear side (4) of the substrate (2) in order to make it easier to pull the laminated material blanks (1) off the base (6), the agent being a parting agent (5) which, when used, has an internal cohesion which is lower than the adhesion of the parting agent (5) to the rear side (4) of the substrate (2) and lower than the adhesion of the parting agent (5) to an adhesive (8) used to stick the laminated material blank (1) on, so that, when the blank (1) is detached from the base (6), the parting agent (5) parts as a result of cohesive failure, the adhesive (8) covered by a layer (9) of the parting agent (5) remaining on the base (6), while the substrate (2), together with the residue (10) of the parting agent (5), is detached completely from the base (6), and the parting agent (5) comprising a polymer as a first component and an anionic emulsifier as a second component.

## Revendications

1. Procédé de fabrication de pièces (1) découpées dans un matériau stratifié et comprenant un substrat imprimable (2), en vue de leur collage sur une base (6), en particulier pour la fabrication d'étiquettes adhésives (1) ou de papier mural adhésif, dans lequel un moyen de décollement (5) qui se décolle de la base (6) par rupture de cohésion lors de l'enlèvement ultérieur des pièces (1) découpées dans un matériau stratifié et collées est appliqué sur un côté arrière (4) du substrat (2) tourné vers la base (6),
un adhésif (8) utilisé pour coller les pièces découpées (1) et recouvert par une couche (9) du moyen de décollement (5) restant sur la base (6) tandis que le substrat (2) se détache complètement de la base (6) avec le reste (10) du moyen de décollement (5),
le moyen de décollement (5) comprenant comme premier composant une dispersion de polymère et comme deuxième composant un émulsifiant anionique.

2. Procédé selon la revendication 1, **caractérisé en ce que** le substrat (2) est revêtu du moyen de décollement (5) sur tout le côté dorsal (4) des pièces découpées (1) pour empêcher un contact direct entre l'adhésif (8) et les pièces découpées (1).

3. Procédé selon les revendications 1 ou 2, **caractérisé en ce que** le moyen de décollement (5) est appliqué sous la forme d'une dispersion aqueuse sur le côté dorsal (4) du substrat (2) et est ensuite séché en même temps que ce dernier.

4. Procédé selon l'une des revendications 1 à 3, en particulier pour la fabrication d'étiquettes autocollantes, **caractérisé en ce que** l'adhésif (8) est appliqué sur le moyen de décollement (5) et **en ce que** le matériau stratifié ou les pièces (1) découpées dans un matériau stratifié sont ensuite collés sur un support dont l'adhérence sur l'adhésif (8) est plus basse que la cohésion du moyen de décollement (5), de sorte que les pièces (1) découpées dans un matériau stratifié peuvent être enlevées du support en même temps que le moyen de décollement (5) et que l'adhésif (8) avant d'être collées sur la base (6).

5. Procédé de collage sur une base (6) de pièces (1) découpées dans un matériau stratifié et comprenant un substrat imprimable (2), en particulier pour coller des étiquettes adhésives (1) ou du papier mural adhésif, le substrat (2) étant revêtu sur son côté dorsal (4) tourné vers la base (6) d'un moyen de décollement (5) qui se décolle par rupture de cohésion lorsque les pièces découpées (1) sont détachées ultérieurement de la base (6), un adhésif (8) utilisé pour coller des pièces découpées (1) et recouvert par une couche (9) du moyen de décollement (5) restant sur la base (6), tandis que le substrat (2) se détache complètement de la base (6) avec le reste (10) du moyen de décollement (5), le moyen de décollement (5) comprenant comme premier composant un polymère et comme deuxième composant un émulsifiant anionique.

6. Procédé selon la revendication 5, **caractérisé en ce que** les pièces (1) découpées dans un matériau stratifié sont collés à l'aide d'un adhésif aqueux (8) et **en ce que** le côté dorsal (4) du substrat (2) est revêtu d'un moyen de décollement (5) répulsif vis-à-vis de l'eau ou résistant à l'humidité, pour empêcher que l'adhésif (8) diffuse jusqu'au matériau stratifié à travers le moyen de décollement (5).

7. Procédé selon les revendications 5 ou 6, en particulier pour la pose d'étiquettes autocollantes sur des objets (6), **caractérisé en ce que** les pièces (1) découpées dans un matériau stratifié sont enlevées d'un support sur lequel elles ont été collées préalablement au moyen de l'adhésif (8) appliqué sur le moyen de décollement (5), l'adhérence de l'adhésif (8) sur le support étant inférieure à la cohésion du moyen de décollement (5), de sorte que les pièces (1) découpées dans un matériau stratifié sont enlevées du support en même temps que le moyen de décollement (5) et que l'adhésif (8).

8. Procédé pour détacher d'une base (6) des pièces (1) découpées dans un matériau stratifié et comprenant un substrat imprimable (2), en particulier pour détacher des étiquettes adhésives qui ont été collées, dans lequel les pièces (1) découpées dans un matériau stratifié sont détachées à l'aide d'un jet de fluide (L) dirigé sur un moyen de décollement (5) disposé entre le côté dorsal (4) des pièces découpées (1) et un adhésif (8) qui a pour effet l'adhérence des pièces découpées (1) sur la base (6), pour décoller le moyen de décollement (5) par rupture de cohésion de telle sorte que l'adhésif (8) recouvert par une partie (9) du moyen de décollement (5) reste sur la base (6) tandis que le substrat (2) se détache complètement de la base (6) avec le reste (10) du moyen de décollement (5), le moyen de décollement (5) comprenant comme premier composant un polymère et comme deuxième composant un émulsifiant anionique.

9. Procédé selon la revendication 8, dans lequel au moins une partie du jet de fluide (L) est dirigée sur des parties du moyen de décollement (5) qui ne présentent pas d'adhésif (8) entre le moyen de décollement (5) et la base (6).

10. Moyen de revêtement du côté arrière (4) d'un matériau stratifié qui est collé au moyen d'un adhésif (8) sur une base (6) sous la forme de pièces (1) découpées dans un matériau stratifié et qui doit éventuellement être détaché plus tard de la base (6), en particulier pour revêtir le côté dorsal d'étiquettes adhésives (1) ou de papier mural adhésif, le moyen (5) comprenant comme premier composant une dispersion de polymère et comme deuxième composant un émulsifiant anionique.

11. Moyen selon la revendication 10, **caractérisé en ce que** le moyen forme un moyen de décollement (5) dont la cohésion interne à l'état d'utilisation est inférieure à l'adhérence du moyen de décollement (5) sur le côté dorsal (4) du matériau stratifié (2) et est inférieure à l'adhérence du moyen de décollement (5) sur un adhésif (8) utilisé pour coller les pièces découpées (1), de sorte que lorsque les pièces découpées (1) sont ultérieurement enlevées de la base (6), le moyen de décollement (5) se décolle par rupture de cohésion, l'adhésif (8) recouvert par une couche (9) de moyen de décollement (5) restant sur la base (6) tandis que le substrat (2) se détache complètement de la base (6) avec le reste (10) du moyen de décollement (5).

12. Moyen selon la revendication 11, en particulier destiné à être utilisé pour la fabrication d'étiquettes autocollantes qui sont collées sur un substrat de support au moyen d'un adhésif (8) avant d'en être retirées pour être collées sur la base (6), **caractérisé en ce que** la cohésion du moyen de décollement (5) est supérieure à l'adhérence de l'adhésif (8) sur le substrat de support de sorte que l'adhésif (8) se détache complètement du substrat du support lorsque les pièces découpées (1) en sont enlevées.

13. Moyen selon l'une des revendications 10 à 12, **caractérisé en ce que** la dispersion de polymère présente une dispersion aqueuse d'un copolymère modifié de styrène et d'acrylate qui possède à l'état sec des propriétés de répulsion de l'eau.

14. Moyen selon l'une des revendications 10 à 13, **caractérisé en ce que** l'émulsifiant anionique est un savon métallique.

15. Moyen selon la revendication 14, **caractérisé en ce que** le savon métallique est le stéarate de calcium.

16. Moyen selon l'une des revendications 10 à 15, **caractérisé en ce que** la proportion pondérale de la dispersion de polymère est comprise entre 40 et 60 % en poids et la proportion pondérale du savon métallique entre 60 et 40 % en poids par rapport au poids total des solides.

17. Moyen selon l'une des revendications 10 à 16, **caractérisé en ce que** la force nécessaire pour détacher les pièces (1) découpées dans un matériau stratifié collés en décollant le moyen de décollement (5) par rupture de cohésion vaut dans une couche (9) du moyen de décollement qui adhère à l'adhésif et dans une couche (10) de moyen de décollement qui adhère aux pièces découpées (1) de 0,05 N à 5 N par cm de largeur de matériau stratifié et de préférence de 0,1 à 1 N par cm de largeur de matériau stratifié.

18. Pièce (1) découpée dans un matériau stratifié, destinée à être collée sur une base (6) et présentant en particulier la forme d'une étiquette adhésive (1) ou d'un papier mural adhésif, comprenant un substrat imprimable (2) et un moyen (5) appliqué sur son côté dorsal (4) pour faciliter son décollement ultérieur de la base (6), le moyen étant un moyen de décollement (5) qui, à l'état d'utilisation, présente une cohésion interne inférieure à l'adhérence du moyen de décollement (5) sur le côté dorsal (4) du substrat (2) et inférieure à l'adhérence du moyen de décollement (5) sur un adhésif (8) utilisé pour coller la pièce découpée (1), de sorte que lorsque la pièce découpée (1) est détachée de la base (6), le moyen de décollement (5) se décolle par rupture de cohésion, l'adhésif (8) recouvert par une couche (9) de moyen de décollement (5) restant sur la base (6) tandis que le substrat (2) se détache complètement de la base (6) avec le reste (10) du moyen de décollement (5), le moyen de décollement (5) comprenant comme premier composant un polymère et comme deuxième composant un émulsifiant anionique.

19. Objet sur lequel est collée une pièce (1) qui est découpée dans un matériau stratifié et qui comprend un substrat imprimable (2) et un moyen de décollement (5) qui est appliqué sur son côté dorsal (4) et qui, à l'état d'utilisation, présente une cohésion interne inférieure à l'adhérence du moyen de décollement (5) sur le côté dorsal (4) du substrat (2) et inférieure à l'adhérence du moyen de décollement (5) sur un adhésif (8) utilisé pour coller la pièce découpée (1), de sorte que lorsque la pièce découpée (1) est détaché de la base (6), le moyen de décollement (5) se décolle par rupture de cohésion, l'adhésif (8) recouvert par une couche (9) de moyen de décollement (5) restant sur la base (6) tandis que le substrat (2) se décolle complètement de la base (6) avec le reste (10) du moyen de décollement (5), le moyen de décollement (5) comprenant comme premier composant un polymère et comme deuxième composant un émulsifiant anionique.

20. Pré-produit pour la fabrication de pièces (1) découpées dans un matériau stratifié et destinées à être collées sur une base (6), constituées d'un matériau stratifié qui comporte un substrat imprimable (2) sous forme de bande ou de feuilles et un moyen (5) appliqué sur le côté dorsal (4) du substrat (2) pour que les pièces (1) découpées dans un matériau stratifié puissent être enlevées plus aisément de la base (6), le moyen étant un moyen de décollement (5) qui, à l'état d'utilisation, présente une cohésion interne inférieure à l'adhérence du moyen de décollement (5) sur le côté dorsal (4) du substrat (2) et inférieure à l'adhérence du moyen de décollement (5) sur un adhésif (8) utilisé pour coller la pièce découpée (1), de sorte que lorsque la pièce découpée (1) est détachée de la base (6), le moyen de décollement (5) se décolle par rupture de cohésion, l'adhésif (8) recouvert par une couche (9) de moyen de décollement (5) restant sur la base (6) tandis que le substrat (2) se détache complètement de la base (6) avec le reste (10) du moyen de décollement (5), le moyen de décollement (5) comprenant comme premier composant un polymère et comme deuxième composant un émulsifiant anionique.
